# EUROPEAN PATENT APPLICATION

(11) **EP 3 604 648 A1**
(43) Date of publication of application: **05.02.2020**
(21) Application number: 18775803.2
(22) Date of filing: 07.02.2018
(51) Int. Cl.: D03D 1/00, B29B 15/10, D03D 11/00

(54) **FIBROUS STRUCTURE AND FIBER-REINFORCED COMPOSITE MATERIAL**

(30) Priority: 31.03.2017 JP 2017071647
(71) Applicant: Kabushiki Kaisha Toyota Jidoshokki, Kariya-shi, Aichi 448-8671 (JP)
(72) Inventor: TAKEI, Hiroyuki, Kariya-shi Aichi 448-8671 (JP)
(74) Representative: TBK
(86) International application number: PCT/JP2018/004255
(87) International publication number: WO 2018/179877

(57) **Abstract**

This fibrous structure comprises, in the thickness direction of a multilayer fabric, a first fabric layer and a second fabric layer overlapping the first fabric layer. The thickness of a first weft in the first fabric layer is thicker than the thickness of a second weft in the second fabric layer. A first pitch of the first weft in the first fabric layer is narrower than a second pitch of the second weft in the second fabric layer.

## Description

### TECHNICAL FIELD

The present invention relates to a fiber structure including a multi-layered fabric, and a fiber-reinforced composite including the fiber structure used as a reinforcement base material.

### BACKGROUND ART

Fiber-reinforced composites have been widely used as lightweight structural components. Fiber structures are used as reinforcement base materials for the fiber-reinforced composites. A fiber-reinforced composite including a reinforcement base material impregnated with a matrix resin is used as a structural component for aircrafts, automobiles, and architectures. Some of the fiber-reinforced composites have a cylindrical or hollow-shaped body. For such a fiber-reinforced composite, a multi-layered fabric, for example, is used as the fiber structure.

In general, a multi-layered fabric is formed of a plurality of stacked fiber layers. A weft fiber layer is formed of a plurality of weft yarns arranged in parallel to one another. The fiber layers are bound by warp yarns in the thickness direction, i.e. the stacking direction of the fiber layers, to be restrained in the thickness direction.

The multi-layered fabric includes a non-restrained portion that is unrestrained by the warp yarn in the thickness direction, along part of the thickness direction of the multi-layered fabric. The non-restrained portion extends, for example, partially along the warp direction and entirely along the weft direction of the multi-layered fabric. A slit is provided between the non-restrained portions adjacent to each other in the thickness direction. The multi-layered fabric may be formed into a hollow shape or cylindrical shape by widening the slit opening in the thickness direction.

### Citation List

### Patent Document

Patent Document 1: Japanese Patent Application Publication No. H01-111038

### SUMMARY OF INVENTION

### Technical Problem

Some of those multi-layered fabrics have a fabric layer formed of a plurality of stacked fiber layers disposed at one end of the multi-layered fabric in the thickness direction with a slit on the border, and another fabric layer formed of a plurality of stacked fiber layers disposed at the other end of the multi-layered fabric in the thickness direction with the slit on the border. A fabric layer disposed at one end of such a multi-layered fabric in the thickness direction may preferably have a different thickness from the thickness of a fabric layer disposed at the other end of the multi-layered fabric in the thickness direction. In the case of Patent Document 1, different thicknesses between the fabric layers may be provided by increasing or decreasing the number of the weft layers forming the fabric layers, for example. However, a fine adjustment of the thickness of the fabric layer is difficult to be made in this case because the thickness of the fabric layer is adjusted by the thickness of each weft layer.

An objective of the present invention is to provide a fiber structure and a fiber-reinforced composite in which the thicknesses of fabric layers may be finely adjusted.

### Solution to Problem

A fiber structure to solve the above problems is a fiber structure that is used as a reinforcement base material of a fiber-reinforced composite and that includes a multi-layered fabric. The fiber structure includes a first fabric layer containing a warp layer and a weft layer, and a second fabric layer containing a warp layer and a weft layer. The first fabric layer and the second fabric layer are stacked one over another in a thickness direction of the multi-layered fabric. A warp yarn in the first fabric layer is thicker than a warp yarn in the second fabric layer, and/or a weft yarn in the first fabric layer is thicker than a weft yarn in the second fabric layer, and a pitch in the first fabric layer is smaller than a pitch in the second fabric layer, where each of the pitches refers to a distance between any two main axes of yarns adjacent to each other in each of the warp layer and the weft layer.

According to the fiber structure described above, when the pitch between the yarns adjacent to each other in the warp layer or the weft layer decreases, the thickness of the yarns increases, whereas when the pitch between the yarns increases, the thickness of the yarns decreases. The first fabric layer may have a different thickness from the second fabric layer by making the pitch between the yarns in the first fabric layer different from the pitch between the yarns in the second fabric layer. This allows setting a preferred value to the thickness of a fabric layer within the range of the thickness of the yarn thereof, and thereby the thicknesses of the first fabric layer and the second fabric layer may be finely adjusted.

The fiber structure may include a restrained portion in which the multi-layered fabric is restrained entirely in the thickness direction, and a non-restrained portion in which the first fabric layer and the second fabric layer adjacent to each other in the thickness direction are unrestrained in the thickness direction. The non-restrained portion may include a slit between the first fabric layer and the second fabric layer in the thickness direction.

According to the fiber structure described above, the thicknesses of the first fabric layer and the second fabric layer that even interpose the slit therebetween may be finely adjusted.

In the fiber structure, the first fabric layer and the second fabric layer are bound together by a binder yarn in the thickness direction. A distance between the binder yarns in the first fabric layer is different from a distance between the binder yarns in the second fabric layer, where each of the distances between binder yarns refers to a distance between any two binder yarns adjacent to each other in the direction in which the binder yarn extends within a range of the thickness of the fabric layer.

According to the fiber structure described above, the binder yarn proceeds through the fabric layer in the thickness direction along the warp yarns or the weft yarns that are stacked in the thickness direction. When the pitch between the warp yarns or the weft yarns in the first fabric layer is different from the pitch between the warp yarns or the weft yarns in the second fabric layer, the distance between the binder yarns in the first fabric layer is also different from the distance between the binder yarns in the second fabric layer. Thus, the first fabric layer and the first fabric layer that even have different thicknesses from each other may be bound by the binder yarn in the thickness direction.

A fiber-reinforced composite to solve the above problems is a fiber-reinforced composite including a reinforcement base material formed of a fiber structure with a matrix resin impregnated into. The fiber structure is the fiber structure according to any one of claims 1 to 3.

According to the fiber structure described above, when the pitch between the yarns adjacent to each other in the warp layer or the weft layer decreases, the thickness of the yarns increases, whereas when the pitch between the yarns increases, the thickness of the yarns decreases. The first fabric layer may have a different thickness from the second fabric layer by making the pitch between the yarns in the first fabric layer different from the pitch between the yarns in the second fabric layer. This allows setting a preferred value to the thickness of a fabric layer within the range of the thickness of the yarn thereof, and thereby the thicknesses of the first fabric layer and the second fabric layer may be finely adjusted. As a result, in the fiber-reinforced composite including a reinforcement base material formed of a fiber structure with a matrix resin impregnated into, the thicknesses of portions in which the first fabric layer and the second fabric layer are used as the reinforcement base material may be finely adjusted.

### Advantageous Effects of Invention

According to the present invention, the thicknesses of the fabric layers may be finely adjusted.

### BRIEF DESCRIPTION OF DRAWINGS

FIG. 1 is a cross-sectional view showing a fiber-reinforced composite according to an embodiment of the present invention.
FIG. 2 is an enlarged cross-sectional view showing a first fabric layer and a second fabric layer of a fiber structure.
FIG. 3 is a schematic view of a loom.
FIG. 4 is a cross-sectional view of a fiber structure according to a comparative example.
FIG. 5A is a partial cross-sectional view showing a state in which a weft yarn is beaten with a reed to form a first weft layer.
FIG. 5B is a partial cross-sectional view showing a state in which the weft yarn is beaten with the reed to form a second weft layer.
FIG. 5C is a partial cross-sectional view showing a state in which the weft yarn is beaten with the reed to form a third weft layer.
FIG. 5D is a partial cross-sectional view showing a state in which the weft yarn is beaten with the reed to form a fourth weft layer.
FIG. 5E is a partial cross-sectional view showing a state in which the weft yarn is beaten with the reed to form the first weft layer.
FIG. 5F is a partial cross-sectional view showing a state in which the weft yarn is beaten with the reed to form the second weft layer.
FIG. 5G is a partial cross-sectional view showing a state in which the weft yarn is beaten with the reed to form the first weft layer.
FIG. 5H is a partial cross-sectional view showing a state in which the weft yarn is beaten with the reed to form the second weft layer.
FIG. 5I is a partial cross-sectional view showing a state in which the weft yarn is beaten with the reed to form the third weft layer.
FIG. 5J is a partial cross-sectional view showing a state in which the weft yarn is beaten with the reed to form the fourth weft layer.

### DESCRIPTION OF EMBODIMENTS

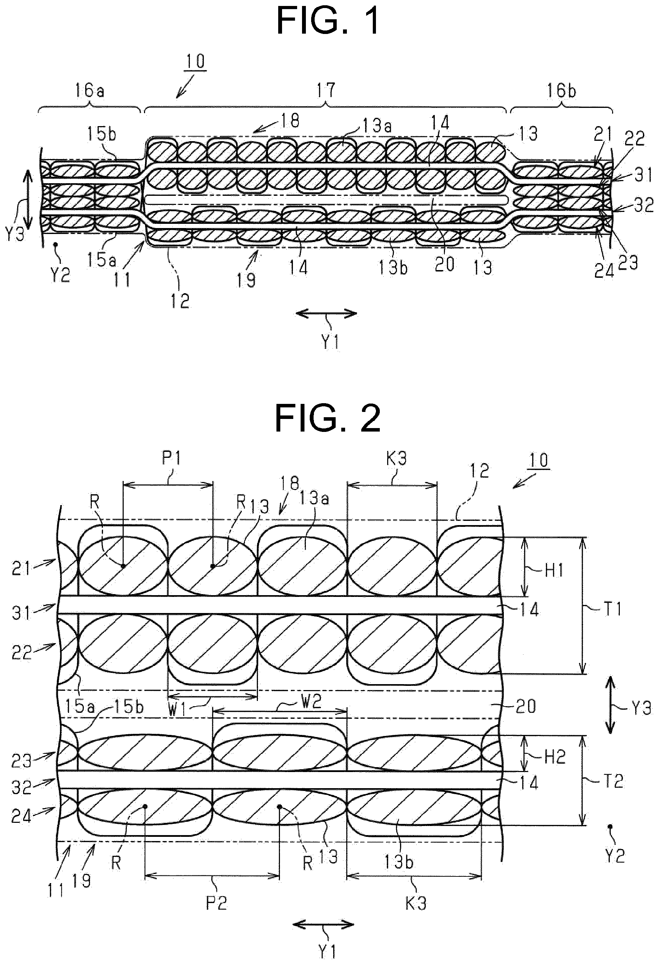

A fiber structure and a fiber-reinforced composite according to an embodiment of the present invention will now be described with reference to FIGs. 1 to 5J.

As shown in FIG. 1, a fiber-reinforced composite 10 includes a fiber structure 11 that includes a multi-layered fabric and is combined with a matrix resin 12. A thermosetting epoxy resin, for example, is used as the matrix resin. The fiber structure 11 includes weft yarns 13 formed of a reinforcement fiber and warp yarns 14 formed of a reinforcement fiber. Each of the weft yarns 13 and each of the warp yarns 14 extend in the directions orthogonal to each other. According to the embodiment, a carbon fiber is used as the reinforcement fiber. All of the warp yarns 14 have the same yarn fineness, and all of the weft yarns 13 have the same yarn fineness, where the yarn fineness denotes a weight per unit length. In addition, each of the weft yarns 13 and the warp yarns 14 are a continuous yarn formed of a fiber bundle of the carbon fibers.

The fiber structure 11 includes a first weft layer 21 in which a plurality of the weft yarns 13 is arranged parallel to one another, a second weft layer 22 disposed below the first weft layer 21, a third weft layer 23 disposed below the second weft layer 22, and a fourth weft layer 24 disposed below the third weft layer 23. The fiber structure 11 also includes a first warp layer 31 in which a plurality of the warp yarns 14 is arranged parallel to one another, and a second warp layer 32 disposed below the first warp layer 31. The first to fourth weft layers 21 to 24 and the first and second warp layers 31, 32 are all fiber layers.

In the fiber structure 11, the first weft layer 21, the first warp layer 31, the second weft layer 22, the third weft layer 23, the second warp layer 32, and the fourth weft layer 24 are stacked from the top to the bottom in this order.

In the fiber structure 11, the direction in which the main axes of the warp yarns 14 extend is referred to as a first direction Y1, and the direction of the main axes of the weft yarns 13 extend is referred to as a second direction Y2. In the fiber structure 11, the stacking direction in which the fiber layers are stacked is referred to as a thickness direction Y3. The first direction Y1 is also a direction in which a plurality of the weft yarns 13 is arranged.

The fiber structure 11 includes a first restrained portion 16a having a constant thickness along the first direction Y1, a non-restrained portion 17 continuous with the first restrained portion 16a in the first direction Y1, and a second restrained portion 16b continuous with the non-restrained portion 17 in the first direction Y1. In the fiber structure 11, the first restrained portion 16a, the non-restrained portion 17, and the second restrained portion 16b are aligned in a line along the first direction Y1.

Each of the first restrained portion 16a and the second restrained portion 16b restrains the first weft layer 21, the first warp layer 31, the second weft layer 22, the third weft layer 23, the second warp layer 32, and the fourth weft layer 24, in the thickness direction Y3. The first restrained portion 16a and the second restrained portion 16b are restrained in the thickness direction Y3 by a first binder yarn 15a and a second binder yarn 15b, respectively.

Each of the first binder yarn 15a and the second binder yarn 15b is one of the warp yarns and used for retaining the shape of the fiber structure 11. Each of the first binder yarn 15a and the second binder yarn 15b is formed of a non-reinforcement fiber. The first binder yarn 15a and the second binder yarn 15b are arranged in parallel with the respective warp yarns 14, but disposed at positions different from each other in the arrangement direction of the warp yarn 14 (the second direction Y2). The first binder yarn 15a and the second binder yarn 15b bind the first restrained portion 16a and the second restrained portion 16b in the thickness direction, respectively.

The first binder yarn 15a and the second binder yarn 15b are arranged to proceed around the outer surface of the weft yarn 13 in the first weft layer 21 at a position above the warp yarn 14 in the uppermost layer (the first warp layer 31) forming the fiber structure 11. The first binder yarn 15a and the second binder yarn 15b are also arranged to proceed around the outer surface of the weft yarn 13 in the fourth weft layer 24 at a position below the warp yarn 14 in the lowermost layer (the second warp layer 32).

The non-restrained portion 17 includes a first fabric layer 18 disposed at one end of the fiber structure 11 in the thickness direction Y3 and a second fabric layer 19 disposed at the other end of the fiber structure 11 in the thickness direction Y3. The first fabric layer 18 includes the first weft layer 21, the first warp layer 31, and the second weft layer 22, by stacking one over another. The first fabric layer 18 is restrained in the thickness direction Y3 by the first binder yarn 15a. In the first fabric layer 18, the first binder yarn 15a is arranged in such a manner that the first binder yarn 15a proceeds around the outer surface of the weft yarn 13 in the first weft layer 21, i.e. the uppermost layer of the first fabric layer 18, proceeds through the first fabric layer 18 in the thickness direction Y3, and proceeds around the outer surface of the weft yarn 13 in the second weft layer 22, i.e. the lowermost layer of the first fabric layer 18. In other word, the first binder yarn 15a proceeds through the first fabric layer 18 along the weft yarns 13 stacked in the thickness direction Y3.

The second fabric layer 19 includes the third weft layer 23, the second warp layer 32, and the fourth weft layer 24, by stacking one over another. The second fabric layer 19 is restrained in the thickness direction Y3 by the second binder yarn 15b. In the second fabric layer 19, the second binder yarn 15b is arranged in such a manner that the second binder yarn 15b proceeds around the outer surface of the weft yarn 13 in the third weft layer 23, i.e. the uppermost layer of the second fabric layer 19, proceeds through the second fabric layer 19 in the thickness direction Y3, and proceeds around the outer surface of the weft yarn 13 in the fourth weft layer 24, i.e. the lowermost layer of the second fabric layer 19. In other word, the second binder yarn 15b proceeds through the second fabric layer 19 along the weft yarns 13 stacked in the thickness direction Y3.

In the non-restrained portion 17, the first fabric layer 18 is separated from the second fabric layer 19 in the thickness direction Y3. The non-restrained portion 17 includes a slit 20 between the second weft layer 22 forming the lowermost layer of the first fabric layer 18 and the third weft layer 23 forming the uppermost layer of the second fabric layer 19. The first binder yarn 15a and the second binder yarn 15b do not bind the second weft layer 22 and the third weft layer 23. The slit 20 extends partially in the first direction Y1 and entirely in the second direction Y2. The fiber structure 11 may be formed into a hollow shape or cylindrical shape by widening the opening of the slit 20 in the thickness direction Y3.

The fiber structure 11 including the multi-layered fabric as described above is impregnated with the matrix resin and hardened, which is combined into the fiber-reinforced composite 10. In other word, the fiber-reinforced composite 10 includes the reinforcement base material formed of the fiber structure 11 with the matrix resin impregnated into. The resin transfer molding (RTM) method, for example, is used as a method of impregnating and hardening the matrix resin.

By impregnating and hardening the matrix resin 12 into the fiber structure 11, the weft yarns 13 and the warp yarns 14 in the fiber structure 11 are combined with the matrix resin to be formed into the fiber-reinforced composite 10. The fiber-reinforced composite 10 is used as, for example, an outer panel of a mobile body such as an aircraft and a passenger vehicle.

As shown in FIG. 2, a dimension in the thickness direction Y3 in the fiber structure 11 is referred to as a thickness. In the fiber structure 11, a thickness T1 of the first fabric layer 18 is greater than a thickness T2 of the second fabric layer 19. The weft yarn 13 forming the first fabric layer 18 is referred to as a first weft yarn 13a. The first weft yarn 13a has a horizontally elongated flat shape as viewed in a cross section orthogonal to a main axis R of the yarn. The maximum dimension of the first weft yarn 13a in the first direction Y1 is referred to as a width W1. The maximum dimension of the first weft yarn 13a in the thickness direction Y3 is referred to as a thickness H1. In the first fabric layer 18, the distance between any two main axes R of the first weft yarns 13a adjacent to each other in the first direction Y1, i.e. the arrangement direction of the weft yarn 13, is referred to as a first pitch P1.

The weft yarn 13 forming the second fabric layer 19 is referred to as a second weft yarn 13b. The first weft yarn 13a and the second weft yarn 13b are the weft yarn 13 having the same yarn fineness. The only difference between the first weft yarn 13a and the second weft yarn 13b is the shape in the cross-sectional view. The second weft yarn 13b also has a horizontally elongated flat shape as viewed in a cross section orthogonal to a main axis R of the yarn. However, the flat shape of the second weft yarn 13b is wider than the flat shape of the first weft yarn 13a. The maximum dimension of the second weft yarn 13b in the first direction Y1 is referred to as a width W2. The maximum dimension of the second weft yarn 13b in the thickness direction Y3 is referred to as a thickness H2.

In the second fabric layer 19, the distance between any two main axes R of the second weft yarns 13b adjacent to each other in the first direction Y1 is referred to as a second pitch P2. The first pitch P1 between the first weft yarns 13a in the first fabric layer 18 is smaller than the second pitch P2 between the second weft yarns 13b in the second fabric layer 19. In other words, the second pitch P2 is greater than the first pitch P1.

As a result, the width W2 of the second weft yarn 13b is greater than the width W1 of the first weft yarn 13a, and the thickness H2 of the second weft yarn 13b is smaller than the thickness H1 of the first weft yarn 13a. In other words, the thickness H1 of the first weft yarn 13a arranged in the first fabric layer 18 is greater than the thickness H2 of the second weft yarn 13b arranged in the second fabric layer 19. Considering that the first fabric layer 18 and the second fabric layer 19 each have two weft layers and the thicknesses of the warp layers of the first and second fabric layers 18, 19 are almost the same, the thickness T1 of the first fabric layer 18 including the first weft yarn 13a is greater than the thickness T2 of the second fabric layer 19 including the second weft yarn 13b.

Since the pitch between the weft yarns 13 in the first fabric layer 18 is different from the pitch between the weft yarns 13 in the second fabric layer 19, the amount of the weft yarns 13 per unit length in the first direction Y1 in the first fabric layer 18 is greater than the amount of the weft yarns 13 per unit length in the second fabric layer 19. In other words, the yarn density in the first fabric layer 18 is higher than the yarn density in the second fabric layer 19.

As to the first binder yarn 15a that restrains the first fabric layer 18, a portion of the first binder yarn 15a extending in the thickness direction Y3 in the first fabric layer 18 is referred to as a straight portion, and a distance between any two straight portions, of the first binder yarns 15a, adjacent to each other in the direction in which the first binder yarn 15a extends, i.e. the first direction Y1, is referred to as a distance K3 between the straight portions of the first binder yarn 15a. Likewise, as to the second binder yarn 15b that restrains the second fabric layer 19, the portion of the second binder yarn 15b extending in the thickness direction Y3 in the second fabric layer 19 is referred to as the straight portion, and the distance between any two straight portions, of the second binder yarns 15b, adjacent to each other in the first direction Y1 is referred to as the distance K3 between straight portions of the second binder yarn 15b. Since the width of the first weft yarn 13a in the first fabric layer 18 is smaller than the width of the second weft yarn 13b in the second fabric layer 19, the distance K3 between the straight portions of the first binder yarn 15a in the first fabric layer 18 is smaller than the distance K3 between the straight portions of the second binder yarn 15b in the second fabric layer 19.

A method of forming the non-restrained portion 17 in the fiber structure 11 will now be described. In this description, it is assumed that the first restrained portion 16a is already woven and the non-restrained portion 17 is to be woven continuously with the first restrained portion 16a.

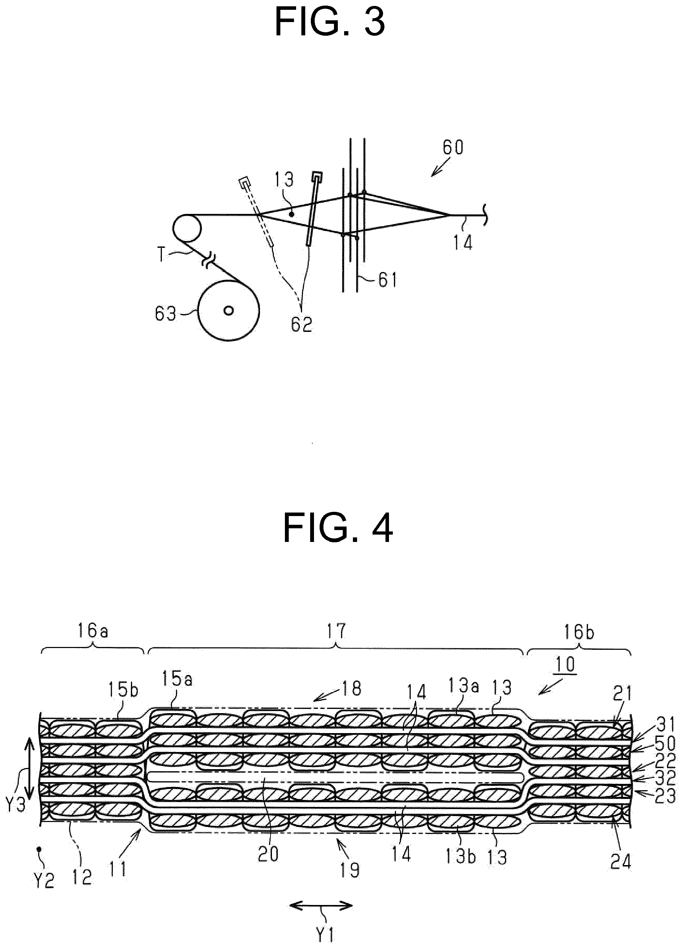

In a loom 60 as shown in FIG. 3, the warp yarns 14 let off from the loom 60 are guided to a heddle 61 and a reed 62. The inserted weft yarn 13 is beaten with the reed 62, and a woven fabric T is wound around a take-up roller 63.

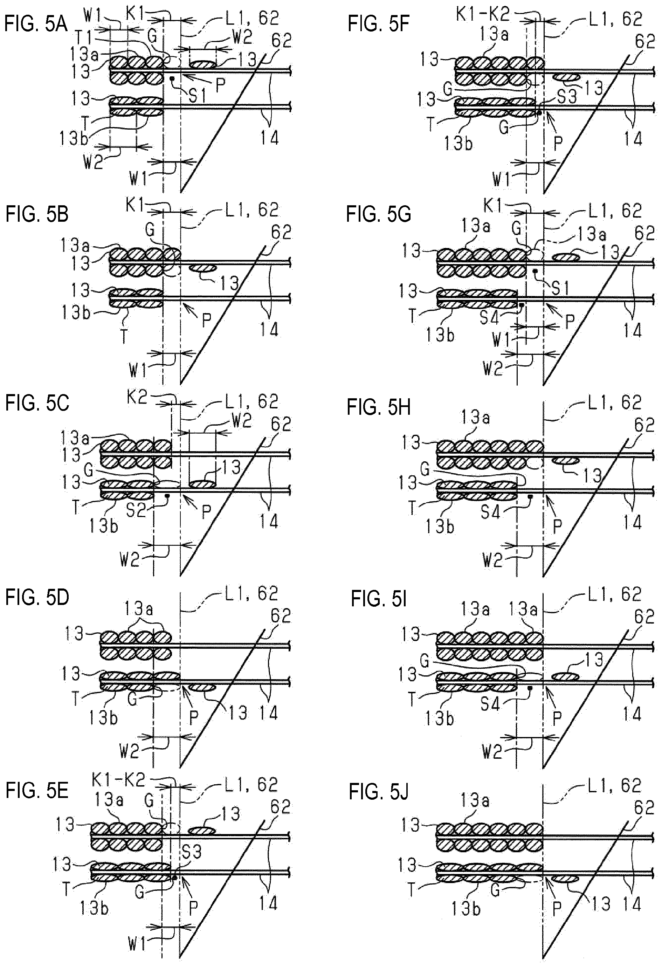

In forming the non-restrained portion 17 with the loom 60, the weft yarn 13 that is to form the first weft layer 21 is inserted and beaten with the reed 62 as shown in FIG. 5A. All the weft yarns 13 to be inserted, described below, have a horizontally elongated flat shape having the same width as the width W2 of the second weft yarn 13b. A beating point P is located at a position indicated with a double-dashed chain line L1 in FIG. 5A. The beating point P is always located at the same position. The weft yarn 13 that is to form the first weft layer 21 is inserted at a position away from the beating point P, i.e. the double-dashed chain line L1, on a side away from to the woven fabric T.

In forming the first weft layer 21, the woven fabric T that is already woven is taken up with the take-up roller 63, and then the woven fabric T is moved from the beating point P toward the take-up roller 63. The moving distance of the woven fabric T that is moved to form the first fabric layer 18 is referred to as a first moving distance K1. The first moving distance K1 corresponds to the width W1 of the first weft yarn 13a in dimension and smaller than the width W2 of the second weft yarn 13b. When the woven fabric T is taken up, a space S1 formed between an end G of the woven fabric T and the beating point P corresponds to the width W1 in dimension.

The moving distance of the woven fabric T may be changed by adjusting the taking-up speed of the take-up roller 63. For example, an increase in the taking-up speed of the take-up roller 63 increases the moving distance of the woven fabric T per a pre-determined time, whereas a decrease in the taking-up speed of the take-up roller 63 decreases the moving distance of the woven fabric T per the pre-determined time.

In inserting the weft yarn 13 and beating the inserted weft yarn 13 with the reed, since the first moving distance K1 is smaller in dimension than the width W2 of the inserted weft yarn 13, the weft yarn 13 is pressed by the reed 62 by the amount that the weft yarn 13 projects from the beating point P. As a result, the weft yarn 13 is deformed into a shape more elongated vertically than the shape before being beaten with the reed as indicated with the double-dashed chain line L1. As a result, the first weft yarn 13a is formed to have the width W1, i.e., the width of the first weft yarn 13a. In this way, a part of the first weft layer 21 is formed.

Subsequently, as shown in FIG. 5B, the woven fabric T is not taken up with the take-up roller 63, and then, the weft yarn 13 that is to form the second weft layer 22 is inserted and beaten with the reed in a like manner that the first weft layer 21 is formed. As a result, the first weft yarn 13a is formed to have the width W1. In this way, a part of the second weft layer 22 is formed.

Subsequently, as shown in FIG. 5C, a part of the third weft layer 23 is formed to form the second fabric layer 19. First, the woven fabric T is taken up with the take-up roller 63. The moving distance of the woven fabric T that is moved at this time is referred to as a second moving distance K2. The second moving distance K2 is smaller than the first moving distance K1 in forming the first fabric layer 18. A space S2 having the width corresponding to the width W2 in dimension is formed together with the space S1 in which the weft yarn 13 is inserted and the first moving distance K1.

The weft yarn 13 that is to form the third weft layer 23 is inserted at a position away from the beating point P, i.e. the double-dashed chain line L1, on the side away from the woven fabric T, and then beaten with the reed. However, the weft yarn 13 does not project from the beating point P. Thus, the weft yarn 13 maintains the width W2 without being pressed. In this way, a part of the third weft layer 23 is formed with the second weft yarn 13b.

Subsequently, as shown in FIG. 5D, the woven fabric T is not taken up with the take-up roller 63, but the weft yarn 13 that is to form the fourth weft layer 24 is inserted and beaten with the reed in a like manner that the third weft layer 23 is formed. As a result, the second weft yarn 13b is formed. In this way, a part of the fourth weft layer 24 is formed.

In forming a part of the first weft layer 21 of the first fabric layer 18 again, the woven fabric T that is already woven is taken up with the take-up roller 63, and then the woven fabric T is moved from the beating point P toward the take-up roller 63. At this time, the portions to form the first weft layer 21 and the second weft layer 22 are already moved toward the take-up roller 63 to form the second fabric layer 19 by the second moving distance K2. As a result, a space corresponding to the second moving distance K2 in dimension is formed. In inserting the first weft yarn 13a, the woven fabric T may be moved by a dimension corresponding to a difference between the first moving distance K1 and the second moving distance K2. The moving distance of the woven fabric T is obtained by subtracting the second moving distance K2 from the first moving distance K1.

As shown in FIG. 5E, the woven fabric T that is already woven with the take-up roller 63 is taken up by the dimension corresponding to the difference between the first moving distance K1 and the second moving distance K2, and then the woven fabric T is moved from the beating point P toward the take-up roller 63. Then, the weft yarn 13 that is to form the first weft layer 21 is inserted at a position away from the beating point P, i.e. the double-dashed chain line L1, on the side away from the woven fabric T, and then beaten with the reed. Since the difference between the first moving distance K1 and the second moving distance K2 is smaller in dimension than the width W2 of the inserted weft yarn 13, the weft yarn 13 is pressed by the reed 62 by the amount that the weft yarn 13 projects from the beating point P. As a result, the weft yarn 13 is deformed into a shape more elongated vertically than the shape of the weft warn before being beaten with the reed as indicated with the double-dashed chain line L1. As a result, the first weft yarn 13a is formed to have the with W1, i.e., the width of the first weft yarn 13a. In this way, a part of the first weft layer 21 is formed.

By taking up the woven fabric T so that a moving distance of the woven fabric T becomes equal to the dimension corresponding to the difference between the first moving distance K1 and the second moving distance K2, a space S3 is formed between an end G of the weft yarn 13 and the beating point P in the portion where the second fabric layer 19 is to be formed. The space S3 corresponds to the difference between the first moving distance K1 and the second moving distance K2, in dimension.

Subsequently, as shown in FIG. 5F, the woven fabric T is not taken up with the take-up roller 63, but the weft yarn 13 that is to form the second weft layer 22 is inserted and beaten with the reed in a like manner that the first weft layer 21 is formed. As a result, the first weft yarn 13a is formed. In this way, a part of the second weft layer 22 is formed.

In forming the first fabric layer 18 again, a part of the first weft layer 21 is formed. First, as shown in FIG. 5G, the woven fabric T is taken up with the take-up roller 63. The distance of the woven fabric T moved at this time is the first moving distance K1. Then, the space S1 to insert the weft yarn 13 is formed. At the same time, a space S4 corresponding to the sum of the space S1 and the space S3 in dimension is formed in the portion where the second fabric layer 19 is to be formed. The dimension of the space S4 that extends along the first direction Y1 is the same as the dimension of the width W2 of the second weft yarn 13b.

The weft yarn 13 that is to form the first weft layer 21 is inserted at a position away from the beating point P, i.e. the double-dashed chain line L1, on the side away from the woven fabric T, and then beaten with the reed. Since the first moving distance K1 is smaller in dimension than the width W2 of the inserted weft yarn 13, the weft yarn 13 is pressed by the reed 62 by the amount that the weft yarn 13 projects from the beating point P. As a result, the weft yarn 13 is deformed into a shape more elongated vertically than the shape before being beaten with the reed as indicated with the double-dashed chain line L1. As a result, the first weft yarn 13a is formed to have the same width as the width W1 that is the width of the first weft yarn 13a. In this way, a part of the first weft layer 21 is formed.

Subsequently, as shown in FIG. 5H, the woven fabric T is not taken up with the take-up roller 63, but the weft yarn 13 that is to form the second weft layer 22 is inserted and beaten with the reed in a like manner that the first weft layer 21 is formed. As a result, the first weft yarn 13a is formed. In this way, a part of the second weft layer 22 is formed.

Subsequently, as shown in FIG. 5I, a part of the third weft layer 23 is formed to form the second fabric layer 19 again. At this time, the space S4 corresponding to the width W2 of the second weft yarn 13b in dimension is formed between an end G of the second weft yarn 13b and the beating point P in the third weft layer 23 that is already woven. Thus, the woven fabric T is not taken up with the take-up roller 63.

The weft yarn 13 that is to form the third weft layer 23 is inserted at a position away from the beating point P, i.e. the double-dashed chain line L1, on the side away from the woven fabric T, and then beaten with the reed. However, the weft yarn 13 does not project from the beating point P. As a result, the weft yarn 13 maintains the width W2 without being pressed. In this way, a part of the third weft layer 23 is formed with the second weft yarn 13b.

Subsequently, as shown in FIG. 5J, the woven fabric T is not taken up with the take-up roller 63, but the weft yarn 13 that is to form the fourth weft layer 24 is inserted and beaten with the reed in a like manner that the third weft layer 23 is formed. As a result, the second weft yarn 13b is formed. In this way, a part of the fourth weft layer 24 is formed.

The subsequent layers will be formed in a like manner. When a pre-determined number of the weft yarns 13 is inserted, forming the first fabric layer 18 and the second fabric layer 19 is done.

The operation of the fiber structure 11 will be now described.

As to the non-restrained portion 17, the first fabric layer 18 above the slit 20 may have a different thickness from the second fabric layer 19 below the slit 20. In such a case, it may be considered to increase the thickness of the first fabric layer 18 by adding weft layers 50 between the first warp layer 31 and the second weft layer 22, as shown in FIG. 4. However, in the method of increasing the thickness by increasing the weft layers 50, the adjustment of the thickness of the first fabric layer 18 depends on the thickness of the weft layer 50, and thus, the thickness may be adjusted only stepwise by the thickness of the weft layer 50.

In contrast, the thicknesses of the first fabric layer 18 and the second fabric layer 19 in the embodiment described above are adjusted by adjusting the pitch between the weft yarns 13 adjacent to each other in the first direction Y1, thereby adjusting the width of the weft yarn 13, and thereby adjusting the thickness of the weft yarn 13.

The embodiment described above has the following advantages.
(1) The thicknesses of the first fabric layer 18 and the second fabric layer 19 may be adjusted by adjusting the pitch between the weft yarns 13 adjacent to each other and adjusting the thickness of the weft yarn 13. This allows setting preferred values to the thicknesses of the first fabric layer 18 and the second fabric layer 19 within a range of the thickness of the weft yarn 13. Thus, the thicknesses of the first fabric layer 18 and the second fabric layer 19 may be finely adjusted unlike a case where the thickness is adjusted only by increasing or decreasing the number of weft layers.
(2) The first fabric layer 18 is made thicker and is thus reinforced by increasing the weft density of the weft yarn 13 higher than the weft density of the second fabric layer 19. This allows saving time and effort and also avoiding an increase in weight comparing a case where a reinforcement fabric different from the fiber structure 11 is joined to a portion to be reinforced.
(3) The thicknesses of the first fabric layer 18 and the second fabric layer 19 may be adjusted by adjusting the taking-up speed of the woven fabric T with the take-up roller 63 and by adjusting the pressed amount of the weft yarn 13 beaten with the reed, while the fabric is being woven with the loom 60. Thus, the thicknesses of the first fabric layer 18 and the second fabric layer 19 may be finely adjusted without changing the weave.
(4) Each of the thicknesses of the first fabric layer 18 and the second fabric layer 19 that even interpose a slit 20 therebetween may be finely adjusted to preferred values by adjusting the pitch between the weft yarns 13 adjacent to each other in each of the first fabric layer 18 and the second fabric layer 19 and adjusting the thickness of the weft yarn 13 in each of the first fabric layer 18 and the second fabric layer 19. This allows making the thickness of the first fabric layer 18 different from the thickness of the second fabric layer 19 that interpose the slit 20 between the first fabric layer 18 and the second fabric layer 19 and also allows applying any value to the thickness of a peripheral wall of a cylindrical shape or the like that the fiber structure 11 is formed into.
(5) The distance K3 between the straight portions of the first binder yarn 15a in the first fabric layer 18 is smaller than the distance K3 between the straight portions of the second binder yarn 15b in the second fabric layer 19. This indicates that the first pitch P1 of the first fabric layer 18 is smaller than the second pitch P2 of the second fabric layer 19. As a result, it is determined that the first fabric layer 18 is thicker than the second fabric layer 19.
(6) While the fiber structure 11 is formed with the loom 60, the thicknesses of the first fabric layer 18 and the second fabric layer 19 may be finely adjusted by adjusting the pitches between the weft yarns 13 in the first fabric layer 18 and the second fabric layer 19 with the reed that beats the weft yarn 13. Thus, the thickness may be adjusted without increasing or decreasing materials to use, unlike a case where the thickness is adjusted by increasing or decreasing the weft yarns 13.
(7) In the fiber-reinforced composite 10 using the fiber structure 11 as the reinforcement base material, the thicknesses of the first fabric layer 18 and the second fabric layer 19 may be finely adjusted individually even when the first fabric layer 18 and the second fabric layer 19 use the weft yarns 13 and the warp yarns 14 having the same yarn fineness. The thickness of a portion of the fiber-reinforced composite 10 where the first fabric layer 18 and the second fabric layer 19 are used as the reinforcement base material may also be finely adjusted individually.

The following modifications may be made to the embodiment described above.

The thickness of the first fabric layer 18 along the first direction Y1 may be changed by changing the thickness of the first weft yarn 13a along the first direction Y1 of the first fabric layer 18. Likewise, the thickness along the first direction Y1 of the second fabric layer 19 may be changed by changing the thickness of the second weft yarn 13b along the first direction Y1 of the second fabric layer 19. In this case, the distance K3 between the straight portions of the first binder yarn 15a proceeding through the first fabric layer 18 depends on the thickness of the first weft yarn 13a, and the distance K3 between the straight portions of the second binder yarn 15b proceeding through the second fabric layer 19 depends on the thickness of the second weft yarn 13b.

The fiber structure 11 is not limited to a form that has the first restrained portion 16a and the second restrained portion 16b. For example, the fiber structure 11 may have only the first restrained portion 16a and may be branched out from the first restrained portion 16a into the first fabric layer 18 and the second fabric layer 19. In this case, the branched portion does not serve as the slit 20.

In the embodiment described above, the thicknesses of the first fabric layer 18 and the second fabric layer 19 are adjusted by making the pitch between the weft yarns 13 adjacent to each other in the first fabric layer 18 different from the pitch between the weft yarns 13 adjacent to each other in the second fabric layer 19. Instead, the thicknesses of the first fabric layer 18 and the second fabric layer 19 may be adjusted by making the pitch between the warp yarns 14 adjacent to each other in the first fabric layer 18 different from the pitch between the warp yarns 14 adjacent to each other in the second fabric layer 19. For example, the warp yarns 14 in the first fabric layer 18 may be thicker than the warp yarns 14 in the second fabric layer 19, or the pitch between the warp yarns 14 in the first fabric layer 18 may be smaller than the pitch between the warp yarns 14 in the second fabric layer 19.

Alternatively, the weft yarns 13 and the warp yarns 14 in the first fabric layer 18 may be thicker than the weft yarns 13 and the warp yarns 14 in the second fabric layer 19 and the pitch between the weft yarns 13 and the pitch between the warp yarns 14 in the first fabric layer 18 may be smaller than the pitch between the weft yarns 13 and the pitch between the warp yarns 14 in the second fabric layer 19.

In the embodiment described above, the weft yarn 13 in the second fabric layer 19 is not pressed by the reed when beaten with the reed. However, the weft yarn 13 in the second fabric layer 19 may be pressed to adjust the thickness.

In the fiber structure 11, the arrangement of the restrained portion and the non-restrained portion may be changed as necessary.

In the embodiment described above, the weft yarn 13 is pressed by adjusting the moving speed of the woven fabric T with the take-up roller 63 and thus adjusting the projecting amount of the weft yarn 13 from the beating point P. However, the method of pressing the weft yarn 13 may be changed. For example, the pressed amount of the weft yarn 13 may be adjusted by changing the beating stroke of the reed.

In the fiber structure 11, the number or the order of the weft layers or the warp layers to be stacked may be changed as necessary.

When the fiber structure 11 is used as the reinforcement base material of the fiber-reinforced composite 10, the type of matrix resin or the method of forming the fiber-reinforced composite 10 are not restricted in particular.

As to the fiber bundle to form the weft yarn 13 and the warp yarn 14, fibers appropriate to the physical properties required for the fiber-reinforced composite 10 may be used: for example, high strength organic fibers such as aramid fibers, poly-p-phenylene benzobisoxazole fibers, and ultrahigh molecular weight polyethylene fibers, and inorganic fibers such as glass fibers and ceramic fibers.

The weft yarn 13 and the warp yarn 14 may be a spun yarn, not a continuous yarn.

The yarn fineness of the weft yarn 13 and the warp yarn 14 does not have to be the same, but may be different.

The shape of the weft yarn 13 to be inserted is not limited to the horizontally elongated flat shape. For example, the weft yarn 13 may have a flat shape, a circular shape, or a vertically elongated flat shape.

The first binder yarn 15a or the second binder yarn 15b may be formed of a reinforcement fiber.

The first binder yarn 15a or the second binder yarn 15b may be one of the weft yarns.

The first binder yarn 15a and the second binder yarn 15b does not have to proceed around the outermost layers at the both ends of the thickness direction of the multi-layered fabric, but may proceed around at some midpoint in the thickness direction.

The ratio of the number of the first weft yarns 13a in the first fabric layer 18 to the number of the second weft yarns 13b in the second fabric layer 19 is not limited to the ratio in the embodiment described above, but may be changed as necessary. In this case, the inserting order of the first weft yarn 13a and the second weft yarn 13b or the dimension of the first moving distance K1 or the second moving distance K2 may be changed as necessary.

The warp yarn 14 may be used as a binder yarn to restrain the fiber structure 11. In this case, the warp yarn 14 binds the first weft layer 21, the second weft layer 22, the third weft layer 23, and the fourth weft layer 24, in the thickness direction.

The following will additionally describe the technical idea that is grasped from the embodiment and modifications described above.
(1) The fiber structure in which the cross-sectional shape of the yarn in the first fabric layer is different from the cross-sectional shape of the yarn in the second fabric layer

### Reference Signs List

- P1: first pitch
- P2: second pitch
- R: main axis of yarn
- K3: distance between straight portions of binder yarn
- 10: fiber-reinforced composite
- 11: fiber structure
- 12: matrix resin
- 13: weft yarn
- 14: warp yarn
- 15a: first binder yarn
- 15b: second binder yarn
- 16a: first restrained portion
- 16b: second restrained portion
- 17: non-restrained portion
- 18: first fabric layer
- 19: second fabric layer
- 20: slit
- 21 to 24: first to fourth weft layers
- 31: first warp layer
- 32: second warp layer

## Claims

1. A fiber structure used as a reinforcement base material of a fiber-reinforced composite, the fiber structure comprising:
a multi-layered fabric, wherein
the fiber structure includes:
a first fabric layer including a warp layer and a weft layer; and
a second fabric layer including a warp layer and a weft layer, the first fabric layer and the second fabric layer being stacked one over another in a thickness direction of the multi-layered fabric,
a warp yarn in the first fabric layer is thicker than a warp yarn in the second fabric layer, and/or
a weft yarn in the first fabric layer is thicker than a weft yarn in the second fabric layer, and
a pitch in the first fabric layer is smaller than a pitch in the second fabric layer, where each of the pitches refers to a distance between main axes of yarns adjacent to each other in each of the warp layer and the weft layer.

2. The fiber structure according to claim 1, wherein
the fiber structure includes:
a restrained portion in which the multi-layered fabric is restrained entirely in the thickness direction; and
a non-restrained portion in which the first fabric layer and the second fabric layer adjacent to each other in the thickness direction are unrestrained in the thickness direction, and
the non-restrained portion includes a slit between the first fabric layer and the second fabric layer in the thickness direction.

3. The fiber structure according to claim 1 or 2, wherein
the first fabric layer and the second fabric layer are bound together by a binder yarn in the thickness direction, and
when a distance between portions of the binder yarn refers to a distance between portions, of the binder yarn, adjacent to each other in a direction in which the binder yarn extends within a range of a thickness of the fabric layer, the distance between the portions of the binder yarn in the first fabric layer is different from the distance between the portions of the binder yarn in the second fabric layer.

4. The fiber structure according to any one of claims 1 to 3, wherein
a cross-sectional shape of the yarn in the first fabric layer is different from a cross-sectional shape of the yarn in the second fabric layer.

5. A fiber-reinforced composite comprising a reinforcement base material formed of a fiber structure with a matrix resin impregnated into, wherein
the fiber structure is the fiber structure according to any one of claims 1 to 4.
